# EUROPÄISCHE PATENTSCHRIFT

(11) **EP 0 859 873 B1**
(45) Veröffentlichungstag und Bekanntmachung des Hinweises auf die Patenterteilung: **24.07.2002**
(21) Anmeldenummer: 96938019.5
(22) Anmeldetag: 16.10.1996
(51) Int. Cl.: C23F 1/44, C22B 25/06

(54) **VERFAHREN ZUR ENTFERNUNG VON ZINN**
PROCESS FOR REMOVING TIN
PROCEDE D'ELIMINATION DE L'ETAIN

(30) Priorität: 16.10.1995 DE 19538440
(43) Veröffentlichungstag der Anmeldung: 26.08.1998
(73) Patentinhaber: SIEMENS AKTIENGESELLSCHAFT, 80333 München (DE); DONCASTERS Precision Castings-Bochum GmbH, 44793 Bochum (DE)
(72) Erfinder: SINGER, Robert, D-91054 Erlangen (DE); KRUG, Peter, D-90427 Nürnberg (DE); ESSER, Winfried, D-44805 Bochum (DE); EWALD, Jürgen, D-45481 Mülheim an der Ruhr (DE); PREUHS, Jürgen, D-46045 Oberhausen (DE); DONNER, Adolf, D-44879 Bochum (DE)
(74) Vertreter: Berg, Peter
(86) Internationale Anmeldenummer: DE9601962
(87) Internationale Veröffentlichungsnummer: WO9714823

(56) Entgegenhaltungen:
- CH-A- 108 307
- DE-B- 1 583 870
- DE-C- 325 973
- FR-A- 410 901
- FR-A- 584 789
- GB-A- 2 012 815
- GB-A- 19 070 527
- US-A- 4 164 542
- GMELIN INSTITUT: "GMELINS Handbuch der GMELIN INSTITUT: "GMELINS Handbuch der anorganischen Chemie, System Nummer 46, anorganischen Chemie, System Nummer 46, Lieferung B, Seiten 364-365", 1971, VERLAG Lieferung B, Seiten 364-365", 1971, VERLAG CHEMIE, WEINHEIM CHEMIE, WEINHEIM

## Beschreibung

Die Erfindung betrifft ein Verfahren zur Entfernung von Zinn von der Oberfläche und/oder aus einem oberflächennahen Bereich eines Bauteils. Weiterhin betrifft die Erfindung eine Anwendung des Verfahrens auf ein Bauteil, insbesondere eine Turbinenschaufel.

In der EP 0 631 832 A1 ist die Herstellung eines Bauteils durch gerichtetes Erstarren einer Metallschmelze beschrieben. Hierbei wird in eine Gießform eine das Bauteil bildende Legierungsschmelze eingefüllt, wobei die Gießform in einer Heizkammer auf einer Temperatur oberhalb der Schmelztemperatur der Legierung gehalten wird. Die Gießform mit der geschmolzenen Legierung wird durch kontinuierliches Einführen in ein Bad aus einer Kühlflüssigkeit zu einem gerichteten Erstarren gebracht. Zur Vermeidung von Wärmeströmen und zur Ausbildung eines hohen Temperaturgradienten ist die Kühlflüssigkeit mit einer wärmeisolierenden Schicht aus fließfähigem Material bedeckt, durch welche hindurch die Gießform in die Kühlflüssigkeit abgesenkt wird.

Als Kühlflüssigkeit kann, wie in der DE-OS 22 42 111 beschrieben, geschmolzenes Zinn mit einer Temperatur von etwa 260 °C verwendet werden. Bei einer Kühlung der Gießform mittels eines Flüssigmetalls (liquid metal cooling (LMC)) besteht die Möglichkeit, daß durch Risse in der Gießform das Flüssigmetall, insbesondere flüssiges Zinn, mit der erstarrten Legierung unmittelbar in Kontakt kommt. Hierbei kann das Zinn an der Oberfläche haften bleiben (Zinnanlagerung) oder in einem oberflächennahen Bereich mit der Legierung eine Verbindung eingehen (Zinnanreicherung). Bei einer möglicherweise auf den Gießvorgang folgenden Wärmebehandlung des gegossenen Bauteils besteht die Möglichkeit eines weiteren Eindiffundierens von Zinn in das Bauteil. Hierdurch besteht die Gefahr der Beeinträchtigung der mechanischen Eigenschaften und der Korrosions-Eigenschaften des Bauteils.

In der DE 36 04 792 A1 ist ein Verfahren zur Herstellung zinnfreier Gegenstände durch Tiefziehen oder Abstreckgleitziehen von verzinntem Eisenblech beschrieben. Eine Zinnauflage auf ein Feinstblech, beispielsweise zur Herstellung von Dosen, wird mit einer starken Lauge, wie Natriumhydroxid, entfernt.

Aus der FR-A-410 901 ist ein Verfahren zur Entfernung von Zinn von Schrott, insbesondere Weißmetall, bekannt. Bei diesem Verfahren geht es darum, auf irgend eine Art und Weise das Zinn von dem Schrott zu entfernen, wobei auf eine Beschädigung des Schrotts kein Bezug und keine Rücksicht genommen wird. Das Verfahren wird hierbei in einem geschlossenen Gefäß durchgeführt, wobei der Schrott einer alkalischen Lösung, Natronlauge, bei einem Druck von 7 Atmosphären und mehr sowie einer Temperatur von 150 °C oder mehr ausgesetzt wird.

Die GB-A-190 705 273 betrifft ein Verfahren zum Entfernen von Zinn oder ähnlichen Metallen von einem Grundkörper, ohne dass der Grundkörper beschädigt wird. Das Verfahren wird hierbei in einem geschlossenen Gefäß durchgeführt mit einer alkalischen Lösung, insbesondere mit Natronlauge. Das Verfahren wird bei einer Temperatur von über 100 °C und in einem Druckbereich zwischen 7 und 15 Atmosphären, d.h. 6 bis 14 Atmosphären-Überdruck durchgeführt.

Die DE-C-325 973 zeigt ein übliches Verfahren zum Entfernen von Zinn, wobei eine besonders effektive Ausnutzung des Rauminhalts eines Druckgefäßes erreicht wird. Dies geschieht dadurch, daß ein senkrecht stehendes Druckgefäß mit 500 1 Rauminhalt mit Weißblech gefüllt wird und etwa 70 l einer Natriumhydroxidlösung eingepumpt werden. Dies bedeutet allerdings, dass die Natriumhydroxidlösung aus einem wie auch immer gearteten Auslaß im oberen Ende des Druckgefäßes und aufgrund der Gravitationswirkung durch das Druckgefäß hindurchströmt. Hierdurch wird eine Benetzung des Weißmetalls und eine Entfernung des Zinn erreicht.

Aufgabe der Erfindung ist es, ein Verfahren zur Entfernung von Zinn von einer Oberfläche und/oder aus einem oberflächennahen Bereich eines Bauteils anzugeben.

Erfindungsgemäß wird die Aufgabe durch ein Verfahren zur Entfernung von Zinn von einer Oberfläche und/oder aus einem oberflächennahen Bereich eines Bauteils gelöst, bei dem das Bauteil in einem Bad aus flüssigem Zinn gerichtet erstarrt wurde und von konzentrierter Natronlauge, die zwischen 30 Gew.-% und 60 Gew.-% Natrium hydroxid enthält bei einem Überdruck zwischen 3 bar und 6 bar und einer Temperatur über 95 °C umströmt wird.

In der Natronlauge wird eine Bewegung erzeugt, so daß das Bauteil von der Natronlauge umströmt wird, wodurch eine höhere Entfernungsrate des Zinns erzielt wird als bei einer fehlenden Umströmung des Bauteils. Besonders vorteilhaft ist eine turbulente Umströmung des Bauteils. Mit einer turbulenten Umströmung wird eine Sättigung der Natronlauge mit Zinn-Ionen an der Oberfläche des Bauteils wirkungsvoll unterbunden.

Das Verfahren wird bei einem Überdruck durchgeführt, der 3 bis 6 bar betragt. Hierzu ist das Verfahren vorzugsweise in einem druckfesten Behälter, einem sogenannten Autoklaven, durchführbar, in welchem ein entsprechender Überdruck erzeugt werden kann. Ein Überdruck von 3 bar bedeutet hierbei einen zusätzlichen, den atmosphärischen Druck übersteigenden Druck. Ein geeigneter Druckbehälter besteht vorzugsweise aus einem Stahl, welcher gegenüber konzentrierter Natronlauge bei hohen Temperaturen und den angegebenen Druckwerten beständig ist.

Das Verfahren wird vorzugsweise bei einem Überdruck zwischen 3 und 4 bar, insbesondere 3,5 bar, und einer Temperatur von zwischen 110 °C und 170 °C, insbesondere 140 °C, durchgeführt.

Eine weitere vorteilhafte Überdruck- und Temperatur-Kombination liegt bei einem Überdruck zwischen 5 und 6 bar, insbesondere 5,5 bar, sowie einer Temperatur zwischen 180 °C und 240 °C, insbesondere von etwa 220 °C. Diese Kombination zeichnet sich dadurch aus, daß bei der Herstellung eines gerichtet erstarrten Bauteils ohnehin eine Behandlung des Bauteils bei der obengenannten Kombination mit konzentrierter Natronlauge zur Entfernung von Anlagerungen aus der Gießform erfolgt. Versuche zeigten überraschenderweise den Effekt, daß gleichzeitig auch eine Entfernung des Zinns stattfindet. Eine geeignete Wahl der Zeitdauer für diesen Prozeß, die Erreichung einer Umströmung des Bauteils und/oder das Aufrechterhalten einer hohen Konzentration der Natronlauge ermöglichen somit eine direkte Einbindung des Verfahrens zur Entfernung von Zinn in den Herstellungsprozeß eines Bauteils ohne weitere zusätzliche Maßnahmen.

Die Verwendung von konzentrierter Natronlauge bei einer erhöhten Temperatur führt zu einer selektiven Ab- bzw. Herauslösung von Zinn und/oder zinnhaltigen Phasen aus einem Bauteil, wobei andere Bereiche der das Bauteil bildenden Legierung durch die konzentrierte Natronlauge im wesentlichen nicht angegriffen werden. Durch das Verfahren zur Entfernung von Zinn bleibt das Bauteil somit im wesentlichen unbeschädigt und besitzt die gewünschten mechanischen Eigenschaften und die Korrosions-Eigenschaften. Die Temperatur liegt bei über 95 °C.

Das Bauteil wird der Natronlauge über eine vorgebbare Zeitdauer ausgesetzt, wobei die Konzentration der Natronlauge während dieser Zeitdauer auf einem weitgehend konstanten Niveau gehalten wird. Die Zeitdauer kann dabei mehrere Tage, insbesondere 11 Tage, betragen. Vorzugsweise wird das Bauteil in ein Bad aus Natronlauge eingetaucht und verbleibt für die vorgebbare Zeitdauer ununterbrochen in dem Bad.

Die verwendete Natronlauge hat einen Anteil in Gewichtsprozent (Gew.-%) von 30 Gew.-% bis 60 Gew.-%, insbesondere 33 %, an Natriumhydroxid (NaOH).

Bei Kontakt von Zinn mit der Oberfläche eines Grundmetalls bildet sich eine Oberflächenschicht aus reinem metallischen Zinn. Darüber hinaus treten insbesondere bei einer Nickelbasislegierung intermetallische Verbindungen zwischen Zinn und dem Grundmetall, insbesondere Nickel, auf. Diese können gegebenenfalls durch das Zinnentfernungsfluid nur mit geringer Wirkung angegriffen werden. Eine Beseitigung dieser intermetallischen Verbindungen erfolgt durch das Verfahren bei deutlich erhöhter Temperatur, Umströmung des Bauteils und erhöhtem Druck dadurch, daß die die intermetallische Verbindungen umgebende zinnreiche Matrix vollständig aufgelöst wird. Somit fallen die intermetallischen Verbindungen heraus und werde durch das Zinnentfernungsfluid abtransportiert. Gegenüber Verfahren zur Entfernung von Zinn, bei denen Säuren mit Zusätzen von Wasserstoffperoxid oder anderen Oxidationsmitteln verwendet werden, wird durch das erfindungsgemäße Verfahren ein Angriff auf das Grundmetall, insbesondere eine Nickelbasislegierung, vermieden. Verfahren mit Säuren und solchen Zusätzen würden zudem zu einem schwarzen Niederschlag von amorphem Zinn auf dem Bauteil führen, welcher zusätzlich entfernt werden müßte.

Das Verfahren zur Entfernung von Zinn wird vorzugsweise auf ein metallisches Bauteil einer Gasturbinenanlage, insbesondere eine Turbinenschaufel, ein Hitzeschild einer Brennkammer oder ein Führungsringsegment angewandt. Das Bauelement ist in einem Bad aus flüssigem Zinn gerichtet erstarrt. Das Bauteil kann beispielsweise nach einem der Herstellungsverfahren wie in der EP-A1 0 631 832 oder der DE-OS 22 42 111 beschrieben hergestellt werden. Vorzugsweise weist das Bauteil eine Nickelbasislegierung, insbesondere eine Superlegierung, auf. Für ein solches Bauteil, welches wie eine Turbinenschaufel oder ein Hitzeschildelement erhöhten korrosiven und mechanischen Beanspruchungen ausgesetzt wird, ist es von besonderer Bedeutung, daß das während der Herstellung angelagerte oder einlegierte Zinn vollständig entfernt wird. Vorhandene Zinnanlagerungen oder Zinnanreicherungen können vor allem die Festigkeit und Korrosionsbeständigkeit des Bauteils beeinträchtigen. Mit dem erfindungsgemässen Verfahren zur Entfernung von Zinn mittels konzentrierter Natronlauge bei einer hohen Temperatur unter Überdruck und/oder bei Umströmung kann das Bauteil bereits im unmittelbaren Anschluß an das Herstellungsverfahren bei lediglich geringfügigen Änderungen an dem Prozeßablauf und gegebenenfalls den Herstellungsvorrichtungen selektiv von dem unerwünschten Zinn befreit werden.

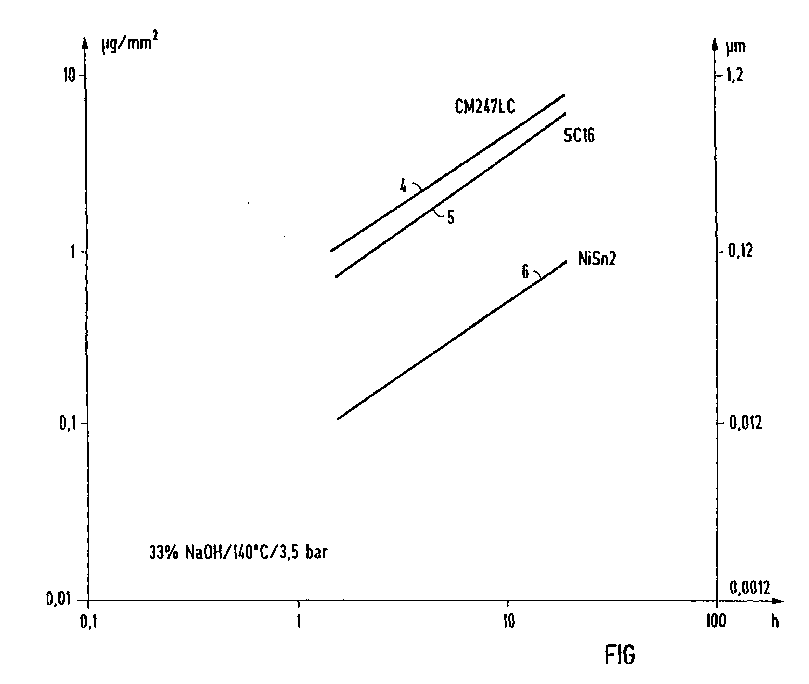

Anhand der Zeichnung werden beispielhaft Wirkungen des Verfahrens dargestellt.
- Die FIGUR: zeigt den Abtrag von Zinn für verschiedene Nickel-Basislegierungen.

In der FIGUR sind der flächenspezifische Gewichtsverlust bzw. die Abtragsrate für verschiedene Nickel-Basislegierungen dargestellt, welche einer konzentrierten Natronlauge mit 33 Gew.-% Natriumhydroxid bei einer Temperatur von 150 °C und einem Überdruck von 3,5 bar ausgesetzt waren. Für alle Legierungen ist deutlich erkennbar, daß der Gewichtsverlust mit der Zeit deutlich zunimmt. Am höchsten ist der Gewichtsverlust für eine Nickel-Superlegierung mit einem Anteil von 0,07 % Kohlenstoff, 8,1 % Chrom, 9,2 % Kobalt, 0,5 % Molybdän, 9,5 % Wolfram, 3,2 % Tantal, 5,6 % Aluminium, 0,7 % Titan, 0,015 % Bor, 0,02 % Zirkon, 1,4 % Hafnium sowie einem Rest an Nickel (Angaben jeweils in Gewichtsprozent). Der Verlauf des Gewichtsverlustes ist hierbei doppelt logartithmisch über der Zeit aufgetragen und der Meßkurve mit dem Bezugszeichen 4 zu entnehmen. Die Meßkurve mit dem Bezugszeichen 5 zeigt einen etwas niedrigeren Flächenspezifischen Gewichtsverlust für eine Nickel-Superlegierung mit einem Anteil (Angaben in Gewichtsprozent) von Kohlenstoff < 0,01 %, Chrom 16 %, Molybdän 3 %, Tantal 3,5 %, Aluminium 3,5 %, Titan 3,5 %, Bor < 0,005 %, Zirkon < 0,008 % und einem Rest aus Nickel. Die weitere Meßkurve 6 gilt für eine Nickel-Zinn-Legierung mit 2 Gew.-% Zinn.

Durch das erfindungsgemässe Verfahren wird eine vollständige Entfernung von Zinn gewährleistet, welches beispielsweise bei der Herstellung einer Turbinenschaufel mittels des Verfahrens der gerichteten Erstarrung und anschließender Flüssigmetallkühlung an die Turbinenschaufel angelagert oder in einem oberflächennahen Bereich einlegiert wurde. Durch Anwendung des Verfahrens kann der Herstellungsprozeß von Turbinenschaufeln derart erweitert werden, daß unmittelbar auch eine Entfernung des Zinns erreichbar ist und damit eine eventuelle Beeinflussung der Korrosionsbeständigkeit und der Festigkeit der Turbinenschaufel ausgeschlossen werden kann.

## Patentansprüche

1. Verfahren zur Entfernung von Zinn von einer Oberfläche und/oder aus einem oberflächennahen Bereich eines Bauteils, das in einem Bad aus flüssigem Zinn gerichtet erstarrt wurde, bei dem das Bauteil von konzentrierter Natronlauge, die zwischen 30 Gew.-% und 60 Gew.-% Natriumhydroxid enthält, bei einem Überdruck zwischen 3 bar und 6 bar und einer Temperatur über 95 °C umströmt wird.

2. Verfahren nach Anspruch 1, bei dem eine turbulente Umströmung des Bauteils erzeugt wird.

3. Verfahren nach Anspruch 1 oder 2, bei dem der Überdruck zwischen 3 bar und 4 bar sowie die Temperatur zwischen 110 °C und 170 °C liegt.

4. Verfahren nach Anspruch 3, bei dem der Überdruck etwa 3,5 bar und die Temperatur etwa 140 °C betragen.

5. Verfahren nach Anspruch 1 oder 2, bei dem der Überdruck zwischen 5 bar und 6 bar sowie die Temperatur zwischen 180 °C und 240 °C liegt.

6. Verfahren nach Anspruch 5, bei dem der Überdruck etwa 5,5 bar sowie die Temperatur etwa 220 °C betragen.

7. Verfahren nach einem der vorhergehenden Ansprüche, bei dem die Natronlauge 33 Gew.-% Natriumhydroxid (NaOH) enthält.

8. Verfahren nach einem der vorhergehenden Ansprüche, wobei das Bauteil ein Gasturbinenbauteil ist.

9. Verfahren nach Anspruch 8, wobei das Bauteil eine Turbinenschaufel, ein Hitzeschildelement oder ein Führungsringsegment ist.

10. Verfahren nach einem der vorhergehenden Ansprüche, bei der das Bauteil eine Nickelbasislegierung aufweist.

## Claims

1. Method for removing tin from a surface and/or from a region close to the surface of a component part which was solidified unidirectionally in a bath of liquid tin, wherein the component part has concentrated aqueous sodium hydroxide containing between 30 wt% and 60 wt% of sodium hydroxide flowing in contact with it at a positive pressure of between 3 bar and 6 bar and a temperature of above 95°C.

2. Method according to Claim 1, wherein a turbulent flow in contact with the component part is generated.

3. Method according to Claim 1 or 2, wherein the positive pressure is between 3 bar and 4 bar and the temperature is between 110°C and 170°C.

4. Method according to Claim 3, wherein the positive pressure is about 3.5 bar and the temperature is about 140°C.

5. Method according to Claim 1 or 2, wherein the positive pressure is between 5 bar and 6 bar and the temperature is between 180°C and 240°C.

6. Method according to Claim 5, wherein the positive pressure is about 5.5 bar and the temperature is about 220°C.

7. Method according to any one of the preceding claims, wherein the aqueous sodium hydroxide contains 33 wt% of sodium hydroxide (NaOH).

8. Method according to any one of the preceding claims, wherein the component part is a gas turbine component part.

9. Method according to Claim 8, wherein the component is a turbine blade, a heat shield element or a guide ring segment.

10. Method according to any one of the preceding claims, wherein the component part comprises a nickel-base alloy.

## Revendications

1. Procédé d'élimination de l'étain d'une surface et/ou d'une zone proche de la surface d'un élément qui a subi une solidification dirigée dans un bain d'étain liquide, dans lequel on fait passer sur l'élément de la lessive de soude concentrée qui contient entre 30 % en poids et 60 % en poids d'hydroxyde de sodium à une surpression comprise entre 3 bars et 6 bars et à une température supérieure à 95°C.

2. Procédé suivant la revendication 1, dans lequel on produit un courant turbulent sur l'élément.

3. Procédé suivant la revendication 1 ou 2, dans lequel la surpression est comprise entre 3 bars et 4 bars et la température est comprise entre 110°C et 170°C.

4. Procédé suivant la revendication 3, dans lequel la surpression est d'environ 3,5 bars et la température d'environ 140°C.

5. Procédé suivant la revendication 1 ou 2, dans lequel la surpression est comprise entre 5 et 6 bars et la température est comprise entre 180°C et 240°C.

6. Procédé suivant la revendication 5, dans lequel la surpression est de 5,5 bars environ et la température de 220°C environ.

7. Procédé suivant l'une des revendications précédentes, dans lequel la lessive de soude contient 33 % en poids d'hydroxyde de sodium (NaOH).

8. Procédé suivant l'une des revendications précédentes, dans lequel l'élément est un élément d'une turbine à gaz.

9. Procédé suivant la revendication 8, dans lequel l'élément est une aube de turbine, un élément formant bouclier contre la chaleur ou un segment annulaire de guidage.

10. Procédé suivant l'une des revendications précédentes, dans lequel l'élément comprend un alliage à base de nickel.
